# EUROPÄISCHE PATENTSCHRIFT

(11) **EP 2 619 149 B1**
(45) Veröffentlichungstag und Bekanntmachung des Hinweises auf die Patenterteilung: **10.02.2016**
(21) Anmeldenummer: 11813316.4
(22) Anmeldetag: 25.09.2011
(51) Int. Cl.: C03B 5/24, C03B 5/235

(54) **VERFAHREN UND EINRICHTUNG ZUR EINSPEISUNG VON PROZESSABGASEN UND ZUR REGELUNG DER ABGASVOLUMENMENGE ZUR VERBESSERUNG DER OFENDRUCKSTABILISIERUNG BEI GLASSCHMELZ- UND LÄUTERPROZESSEN IN QUERFLAMMENWANNEN MIT REGENERATIVHEIZUNGEN**
METHOD AND DEVICE FOR FEEDING IN PROCESS WASTE GASES AND FOR CONTROLLING THE WASTE GAS VOLUME IN ORDER TO IMPROVE THE FURNACE PRESSURE STABILIZATION IN GLASS MELTING AND REFINING PROCESSES IN TRANSVERSE-FIRED FURNACES HAVING REGENERATIVE HEATING UNITS
PROCÉDÉ ET DISPOSITIF PERMETTANT L'ALIMENTATION EN EFFLUENTS GAZEUX DE PROCESS ET LA RÉGULATION DU VOLUME DES EFFLUENTS GAZEUX AFIN D'AMÉLIORER LA STABILISATION DE LA PRESSION DANS UN FOUR DANS DES PROCESS DE FONTE DE VERRE ET DE FILTRATION DANS DES CUVES À BRÛLEURS TRANSVERSAUX AVEC CHAUFFAGE PAR RÉCUPÉRATION

(30) Priorität: 23.09.2011 DE 102011053909; 26.09.2010 DE 102010037779
(43) Veröffentlichungstag der Anmeldung: 31.07.2013
(73) Patentinhaber: Get Glass Engineering GmbH, 45886 Gelsenkirchen (DE)
(72) Erfinder: WENNING, Rolf, 46397 Bocholt (DE)
(74) Vertreter: Weissfloh, Ingo
(86) Internationale Anmeldenummer: PCT/DE2011/075233
(87) Internationale Veröffentlichungsnummer: WO 2012/048706

(56) Entgegenhaltungen:
- EP-A2- 0 305 584
- DD-A1- 143 242
- DE-A1-102008 002 955

## Beschreibung

Verfahren und Einrichtung zur Einspeisung von Prozessabgasen und zur Regelung der Abgasvolumenmenge zur Verbesserung der Ofendruckstabilisierung bei Glasschmelz- und Läuterprozessen in Querflammenwannen mit Regenerativheizungen, insbesondere für die Flachglasherstellung.

Es sind bereits verschiedene Verfahren und Vorrichtungen zur Ofendruckstabilisierung bekannt. So wird in der DE 103 04 973 eine Regelvorrichtung für eine Anlage zum Schmelzen und/oder Läutern von Glas mit Regeleinrichtungen beschrieben, welche zumindest zwei Regelkreisebenen bilden, wobei die Regelvorrichtung eine Verknüpfungseinrichtung aufweist, welche eine Vielzahl von Sollwerten und/oder Istwerten über mehrere Regelkreisebenen verknüpfen kann und die Regelkreisebenen hierarchisch geordnet sind und die zumindest eine Regeleinrichtung der übergeordneten Regelkreisebene eine erste Vorgabeeinrichtung umfasst, mit welcher der zumindest einen Regeleinrichtung der untergeordneten Regelkreisebene Sollwerte vorgegeben werden können, wobei die Regeleinrichtung eine erste Erfassungseinrichtung zur Erfassung zumindest einer übergeordneten Regelgröße der Regelgrößen volumetrische Blasenanzahldichte, Blasengrößenvertellung und Gehalt der in der Glasschmelze gelösten Gase zur Regelung der Glasqualität aufweist und die Regeleinrichtung eine zweite Erfassungseinrichtung zur Erfassung zumindest einer untergeordneten Regelgröße der Prozessgrößen unter anderem der Temperatur, dem atmosphärischer Restdruck in der Läuterkammer, dem Sauerstoffpartialdruck des Abgases, dem Ofendruck in der Schmelzwanne und dem Druck und/oder Volumenstrom des Schutzgases aufweist.

In der DE 1109326 wird eine Vorrichtung zum Regeln des Rawndruckes und Abgasaustritts von brennstoffbeheizten Industrieöfen, insbesondere Glasschmelzöfen beschrieben, bei welcher ein gegen eine Öffnung des Ofens gerichteter Luftstrom Anwendung findet, wobei in der Öffnung des Ofens ein Thermoelement angeordnet ist, welches über einen an sich bekannten Temperaturregler den Stellmotor eines in der Blasluftleitung des Luftstromes angeordneten Drosselorganes steuert.

Weiterhin wird in der DE 10 2008 002 955 A1 Das Verfahren zur Ofendruckstabilisierung bei sich ändernden Abgasvolumenmengen beim Befeuerungswechsel bei Glasschmelz- und Läuterprozessen in Querflammenwannen mit Regenerativheizungen, einer Herdraumregelklappe und einem Saugzug vor einem Kamin beschrieben, welches bei einem einsetzenden Befeuerungswechsel zwischen zwei Regenerativheizungen eine Regelklappe eines Bypasses öffnet und nach dem Befeuerungswechsel die Regelklappe des Bypasses wieder schließt. Hierbei wird ein Bypass, der um den Saugzug angeordnet ist und eine Regelklappe mit einer Steuerung besitzt, eingesetzt.

Bei herkömmlichen Querflammenwannen zur Flachglasherstellung werden Regeneratoren eingesetzt, die die Effizienz des Schmelzprozesses signifikant verbessern. So wird bei den üblichen Wannengrößen (600 bis 800 Tagestonnen) mit einer Reduzierung des Erdgasverbrauchs um 1000 Nm /h ausgegangen. Um eine solche Energieabsenkung zu ermöglichen, wird in diskreten Zeitabständen die Befeuerungsseite gewechselt. Dieser Seitenwechsel findet derzeit in der Regel alle 20 Minuten statt.

Der Schmelz- und Läuterprozess in Querflammenwannen reagiert sehr sensibel auf Veränderungen. Ein häufigerer Wechsel der Befeuerungsseite wird nicht akzeptiert, obwohl die Wärmeaufnahmefähigkeit der Regeneratoren schnell abnimmt und somit eine Reduzierung der Wechselzeit aus energetischer Sicht anzustreben wäre. Begründet wird das Festhalten an dem 20 Minutenzyklus damit, dass ein Feuerwechsel massive Ofendruckschwankungen zur Folge hat. Derartige Ofendruckschwankungen stören den Schmelz- und Läuterprozess sehr. Überdies ist nachvollziehbar, dass ständige Druckschwankungen die Seiten- und Stirnwände sowie das Gewölbe belasten und zu Ermüdungserscheinungen führen, so dass Abplatzungen auftreten, die sich im Glas wiederfinden und die Ausbeute verschlechtern. Erschwerend kommt hinzu, dass Flachglashersteller, bedingt durch die geforderten Schadstoffgrenzwerte, Abgasreinigungen einsetzen müssen, die aus einem Reaktor (Entschwefelung) einem E-Filter (Entstaubung) und einer Denox (Entstickung) bestehen. Moderne Anlagen integrieren darüber hinaus noch zusätzlich Kesselanlagen in den Abgasstrom, um die Abwärme zur zusätzlichen Dampferzeugung zu nutzen. Derartige komplexe Anlagen, die sich im Abgasstrom zwischen der Schmelzwanne und dem Schornstein befinden, verursachen ihrerseits zusätzliche, permanente und/oder zufällige Druckstöße, die durch Zu- und Abschaltvorgänge verursacht werden. Die Auswirkungen auf die Schmelzwanne sind zum Teil durchaus mit den Druckschwankungen vergleichbar, die beim Wechsel der Befeuerungsseite auftreten. Obwohl die bekannten Lösungen ihren Beitrag zur Lösung der vorgenannten Aufgaben leisten, gibt es jedoch weiterhin ein großes Optimierungspotential zur Minimierung der Druckschwankungen und zum Ausnutzen der Abwärme der am Prozess beteiligten Stationen. Die Gefahr, dass bei einem Feuerungswechsel wegen einer Temperaturabsenkung im Abgaskanal die Betriebssicherheit der Denox (Entstickung) nicht mehr gewährleistet ist, erfordert weitere Maßnahmen zum zuverlässigen Einhalten der Mindesttemperatur.

In der vor der Schmelzwanne angeordneten Abstehwanne wird zu Kühlzwecken Umgebungsluft eingeblasen, um den gewünschten Temperaturgradienten im geschmolzenen Glas von zwischen 200 und 300 Grad C zu erreichen. Bei einer Kühlluftmenge von zwischen 4000 und 8000 m³_{N}/h liegt die abgeführte Wärmeleistung bei etwa 1 bis 2 MW. Die Ablufttemperatur liegt dabei bei etwa 800 Grad C. Diese Wärme wird derzeit entweder in die Halle verteilt und belastet sowohl die Hallenkonstruktion wie auch das Betriebspersonal oder sie wird über das Dach geführt und Witterungseinflüsse beeinflussen den Prozess in der Abstehwanne.

Neben der Energieeinsparung in den Herstellungsprozessen sowie der Qualitätsverbesserung des Prozesses werden gegenwärtig große Anstrengungen unternommen, die enorme Wärmemenge einer Schmelzwanne, wenn auch in bescheidener Weise, zurückzugewinnen sowie in sogenannten KWK-Anlagen zu verstromen.

Aufgabe der Erfindung ist es, ein Verfahren und eine dazugehörige Einrichtung zur Einspeisung von Prozessabgasen und zur Regelung der Abgasvolumenmenge zur Verbesserung der Ofendruckstabilisierung, zur Erhöhung der Betriebssicherheit von Entstickungsanlagen und zur Ausnutzung der Abwärme zur Prozessstabilisierung und zur Energiegewinnung bzw. Energierückgewinnung bei Glasschmelz- und Läuterprozessen in Querflammenwannen bzw. Schmelzwannen mit Regenerativheizungen, insbesondere für die Flachglasherstellung zu schaffen.

Mit der Erfindung wird im angegebenen Anwendungsfall erreicht, dass ein Verfahren und eine Einrichtung zur Einspeisung von Prozessabgasen und zur Regelung der Abgasvolumenmenge zur Verbesserung der Ofendruckstabilisierung, zur Erhöhung der Betriebssicherheit von Entstickungsanlagen und zur Ausnutzung der Abwärme bei Glasschmelz- und Läuterprozessen in Querflammenwannen mit Regenerativheizungen geschaffen wird, wobei die Prozessabgase aus der Abstehwanne über einen Bypass in den Hauptabgaskanal der Querflammenwanne geleitet werden und dadurch während der Dauer eines Befeuerungswechsels der Regenerativheizungen der Hauptabgaskanal mit Prozessabgas beaufschlagt wird und somit Druckschwankungen minimiert werden. Die Exergie des Abgasvolwnenstromes wird erheblich angehoben, wodurch die Nutzung der Abwärme zur Elektroenergieerzeugung in Kraftwärmekopplungsanlagen eine zusätzliche Energieausbeute ermöglicht und somit die Energieeffizienz der Anlage erheblich verbessert wird. Zusätzlich erhöht sich die mittlere Temperatur in der Abgasreinigungsanlage deutlich. Die Betriebssicherheit der Abgasreinigungsanlage wächst. Mit dem erfindungsgemäßen Verfahren lassen sich die Herstellungskosten senken. Die eingesetzte Energie wird effizient eingesetzt und mehrfach verwendet.

Vorteilhafte Ausgestaltungen des Verfahrens sind in den Ansprüchen 2 bis 4 und der Einrichtung in den Ansprüchen 6 bis 10 dargestellt. Das Verfahren erfährt eine Weiterbildung nach Anspruch 2, indem die Regelklappen in Abhängigkeit der Befeuerung eingestellt werden. Hierdurch werden die Druckschwankungen in der Querflammenwanne weiter minimiert, da der Hauptabgaskanal auch in Befeuerungspausen weiterhin mit Abgasen beaufschlagt wird und somit der Druckabfall im System während der Befeuerungspause ausgeglichen wird. Hierdurch ist eine Qualitätssteigerung in der Herstellung des Flachglases möglich. Die zugeführte Abwärme sorgt zusätzlich für eine gleichbleibende Abgastemperatur, wodurch nachgelagerte Kraftwärmekopplungsanlagen und Entgiftungsanlagen zuverlässig arbeiten. Nach Anspruch 3 werden die in den Bypass geleiteten Abgase durch einen Überhitzer einer Dampfkraftmaschine geleitet. Der in der Dampfkraftmaschine erzeugte Sattdampf wird durch die Abgase aus der Abstehwanne weiter erhitzt, wodurch der weiter erhitzte Sattdampf die nachgelagerte Turbine in der Dampfkraftmaschine effizienter antreibt. Der Wirkungsgrad erhöht sich erheblich. Nach Anspruch 4 wird im Überhitzer der Dampfkraftmaschine eine Wärmequelle bedarfsgerecht zugeschaltet. Je nach Produktionsvolumen kommt es zu Schwankungen bei der Abgastemperatur, wobei es zu einer Unterschreitung des unteren Grenzwertes der Abgastemperatur für eine minimale Überhitzung kommen kann. Mit dem vorzugsweise einzusetzenden Gasbrenner lassen sich hierdurch die für eine Überhitzung notwenigen Temperaturen erzielen. Weitere Schwankungen in der Abgastemperatur werden ausgeglichen. Indem nach Anspruch 5 die Abgase aus der Abstehwanne an einer Mischstelle mit Umgebungsluft gemischt werden, ist eine Anpassung der Abgastemperatur für das Durchlaufen des Überhitzers und für das Einleiten des Abgases in den Hauptabgaskanal möglich. Indem die Mischstelle vor den Regelklappen angeordnet ist, werden Druckschwankungen in der Abstehwanne vermieden. Somit bleibt der Herstellungsprozess in der Abstehwanne unbeeinflusst und die Qualität der Produktion erhalten. Bei der Einrichtung nach Nebenanspruch 6 ist ein mit einer Regelklappe regelbarer Bypass vom Kamin der Abstehwanne zum Hauptabgaskanal der Querflammenwanne geführt. Hierdurch ist es möglich den Ofendruck weiter zu stabilisieren und die Energie im Abgasvolumenstrom anzuheben und zur Energieerzeugung einzusetzen. Gleichzeitig erhöht sich die Betriebssicherheit der Entstickungsanlage. Die Qualität des Glasherstellungsprozesses wird verbessert. Zudem ist die Steuerung der Regelklappe mit dem Ofendrucksensor verbunden. Hierdurch werden auf direktem Wege Abweichungen eines Sollwertes des Ofendrucksensors an die Steuerung der Regelklappe geleitet, die eine Nachregelung der Regelklappenstellung auslösen. Weiterhin -ist die Steuerung der Regelklappe mit einem Abgasvolumenmengensensor verbunden, wodurch auf direktem Wege Abweichungen eines Sollwertes des Abgasvolumenmengensensors an die Steuerung der Regelklappe geleitet werden und eine Nachregelung auslösen können. Nach Anspruch 7 ist die Steuerung der Regelklappe mit einer Befeuerungssteuerung verbunden, wodurch auf direktem Wege die Befeuerungszyklen an die Steuerung der Regelklappe geleitet werden und eine Regelung auslösen. Indem nach Anspruch 8 die Steuerung der Regelklappe mit der Befeuerungssteuerung verbunden ist, ist es möglich, die Regelklappen zusätzlich in Abhängigkeit der Befeuerung zu regeln, um somit die beim Befeuerungswechsel auftretenden Druckschwankungen weiter zu minimieren. Indem nach Anspruch 9 am Überhitzer eine zusätzliche Wärmequelle vorhanden ist, besteht die Möglichkeit bei zu niedriger Abgastemperatur die für die Überhitzung notwendigen Temperaturen zu erreichen. Hierdurch wird der kontinuierliche und effiziente Betrieb der Dampfkraftmaschinen sichergestellt. Bei der Weiterbildung nach Anspruch 10 ist im Kamin eine Mischstelle vorhanden. Hierdurch ist es möglich den Abgasen der Abstehwanne Umgebungsluft beizumischen, um so die Abgastemperatur für die weitere Verwendung anzupassen. Die Mischstelle ist im Kamin zwischen der Abstehwanne und den Regelklappen angeordnet. Hierdurch bleibt der Herstellungsprozess in der Abstehwanne unbeeinflusst, da Druckschwankungen vermieden werden.

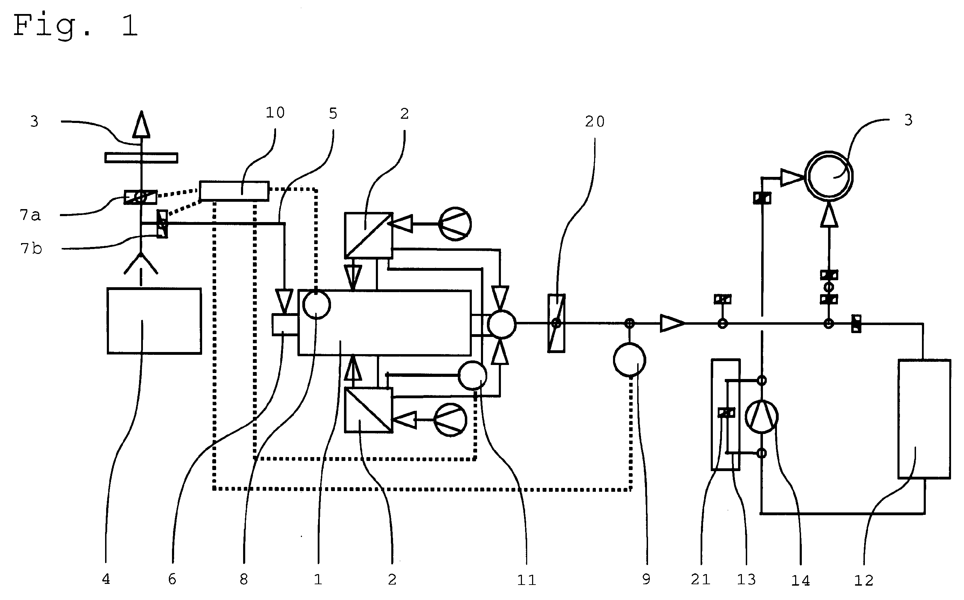

Zwei Ausführungsbeispiele der Erfindung sind in den folgenden Zeichnungen dargestellt und werden im Folgenden näher beschrieben. Es zeigen
Fig. 1 eine Variante für den Verfahrenfluss der erfindungsgemäßen Lösung und
Fig. 2 ein vereinfachtes Verfahrensflussbild beim Einsatz eines Überhitzers.

Das als EQM (Equal Pressure Method) bezeichnete Verfahren bietet die Möglichkeit eine der negativsten Prozesseinflüsse (schwankender Ofendruck) bei einem Feuerwechsel deutlich zu reduzieren, indem der Unterdruck hinter der Ofendruckregelklappe 20 auch bei starker, schlagartiger Reduzierung der abzusaugenden Abgasvolumenmenge quasi konstant gehalten wird. Zusätzlich ergibt sich ein hohes Energieeinsparungspotential.

Das Verfahren zur Ofendruckstabilisierung bei sich ändernden Abgasvolumenmengen beim Befeuerungswechsel bei Glasschmelz- und Läuterprozessen in Querflammenwannen 1 mit Regenerativheizungen 2, einer Ofendruckregelklappe 20 und einem Saugzug 14 vor einem Kamin 3, nutzt bei einem einsetzenden Befeuerungswechsel zwischen zwei Regenerativheizungen 2 eine Saugzugbypassregelklappe 21 eines Saugzugbypasses 13. Die Saugzugbypassregelklappe 21 wird beim einsetzenden Befeuerungswechsel geöffnet und nach dem Befeuerungswechsel wird die Saugzugbypassregelklappe 21 des Saugzugbypasses 13 wieder geschlossen. Hierzu besitzt die Saugzugbypassregelklappe 21 eine Saugzugsteuerung.

Die Öffnung der Saugzugbypassregelklappe 21 wird zusätzlich nach den Messungen eines Ofendrucksensors 8 oder nach den Messungen des Abgasvolumenmengensensors 9 über die Saugzugsteuerung eingestellt.

Die Schwankungen des Ofendruckes werden darüber hinaus auch durch das Zuschalten oder Abschalten von im Abgasstrom vorhandenen Reinigungssystemen 12, Entgiftungssystemen 12 und Wärmetauschersystemen 12 verursacht. Zur Minimierung dieser Einflüsse wird zusätzlich zur Regelung der Öffnung der Saugzugbypassregelklappe 21 des Saugzugbypasses 13 die Drehzahl des Saugzuges 14 verändert. Die Änderung der Drehzahl des Saugzuges 14 erfolgt hierbei in Abhängig vom Öffnungsgrad der Saugzugbypassregelklappe 21. Bei konstanter Drehzahl des Saugzuges 14 ist eine Stabilisierung des Ofendruckes durch Veränderung des Öffnungsgrades der Saugzugbypassregelklappe 21 möglich. Da der Schmelz- und Läuterprozess in Querflammenwannen 1 sehr sensibel auf Veränderungen reagiert, wird ein häufigerer Wechsel der Befeuerungsseite nicht akzeptiert, obwohl die Wärmeaufnahmefähigkeit der Regenerativheizungen 2 schnell abnimmt und somit eine Reduzierung der Wechselzeit aus energetischer Sicht anzustreben wäre. Mit diesem Verfahren eröffnet sich die Möglichkeit, die Feuerwechsel von derzeit üblichen Wechselzeiten aller 20 Minuten zu reduzieren, d. h. die Anzahl der Feuerwechsel kann erhöht werden. Die geringeren Druckschwankungen in der Querflammenwanne machen kürzere Wechselzeiten möglich, wodurch die Leistungsfähigkeit der Regeneratoren angehoben wird. Das Ergebnis ist bei üblichen Wannengrößen (600 - 800 Tagestonnen) eine hochgerechnete Erdgasverbrauchssenkung von 100 bis 200 Nm/h. Darüber hinaus lässt sich der erforderliche Unterdruck durch die Regelung des Saugzuges 14 auf ein Minimum senken, was zusätzlich zu einer Einsparung von bis zu 50 KWh/h für den Betrieb des Saugzugs 14 nach sich zieht.

Durch die deutliche Absenkung der Druckschwankungen wird die Gefahr von Abplatzungen gesenkt. Dadurch wird die Anzahl an Fremdpartikel (Steinchen) im Fertigglas geringer.

Die zur Durchführung des vorgenannten Verfahrens eingesetzte Einrichtung dient zur Ofendruckstabilisierung bei sich ändernden Abgasvolumenmengen beim Befeuerungswechsel bei Glasschmelz- und Läuterprozessen in Querflammenwannen 1 mit Regenerativheizungen 2, die ihre Verbrennungsluft über übliche Einrichtungen beziehen. Diese Anlagen besitzen herkömmlich eine Ofendruckregelklappe 20 und einen Saugzug 14 vor einem Kamin 3. Ein Saugzugbypass 13 ist um den Saugzug 14 angeordnet und besitzt eine Saugzugbypassregelklappe 21 mit einer Saugzugsteuerung. Dieser Saugzugbypass 13 wird bei Feuerwechsel geregelt geöffnet, Damit wird der Unterdruckanstieg in der Anlage verhindert. Weder die massive Ofendruckregelklappe 20, noch der träge, frequenzgeregelte Saugzug 14 können diese Arbeit leisten.

Die Saugzugsteuerung des Saugzugbypasses 13 ist vorteilhaft mit einer Befeuerungssteuerung 11, mit mindestens einem Ofendrucksensor 8 und mit einem Abgasvolumenmengensensor 9 verbunden. Zusätzlich ist zur Vermeidung von durch im Abgasstrom angeordneten Reinigungssystemen 12, Entgiftungssystemen 12 und Wärmetauschersystemen 12 hervorgerufenen Ofendruckschwankungen die Drehzahl des Saugzuges 14 veränderbar. Hierfür ist der Saugzug 14 an eine Drehzahlregelungsvorrichtung angeschlossen.

Bei dem erfindungsgemäßen Verfahren zur Verbesserung der Ofendruckstabilisierung bei Glasschmelz- und Läuterprozessen für die Flachglasherstellung in Querflammenwannen 1 mit Regenerativheizungen 2 mit einem Saugzugbypass 13 um einen Saugzug 14 werden durch Einspeisung von Prozessabgasen und der Regelung des Abgasvolumens die Abgase aus dem Kamin 3 einer Abstehwanne 4 über einen Bypass 5 in einen Hauptabgaskanal 6 der Querflammenwanne 1 geleitet. In dem Kamin 3 und dem Bypass 5 werden hierzu bedarfsweise Regelklappen 7a und 7b geöffnet und geschlossen. Das Öffnen und Schließen der Regelklappen 7a und 7b wird durch die prozessbestimmenden Größen des Ofendrucks und des Abgasvolumenstroms beeinflusst. Hierfür sind die den Ofendruck und den Abgasvolumenstrom überwachenden Sensoren 8 und 9 mit einer Steuerung 10 verbunden. Der Ofendrucksensor 8 und der Abgasvolumensensor 9 übergeben die Messgrößen in regelmäßigen Abständen an die Steuerung 10. Bedarfsweise ist die Regelklappe 7a des Kamins 3 vollständig oder nur zum Teil geschlossen, wogegen die Regelklappe 7b des Bypasses 5 geöffnet ist. Die den Ofendruck und den Abgasvolumenstrom beeinflussenden Größen sind neben dem Befeuerungswechsel die Reinigungssysteme 12, die Entgiftungssysteme 12 und die Wärmetauschersysteme 12. Darüber hinaus ist die Steuerung 10 der Regelklappen 7a, 7b mit der Befeuerungssteuerung 11 verbunden.

Durch das Einleiten der Abgase der Abstehwanne 4 in den Hauptabgaskanal 6 der Querflammenwanne 1 wird die Energie des Abgasvolumenstroms um maximal drei MW angehoben. Durch diese Anhebung lässt sich der Ertrag an Turbinen zur Erzeugung von Elektroenergie um 400 bis 600 kW/h steigern. Ofendruckschwankungen werden weiter reduziert, da während der gesamten Wechselzeit der Hauptabgaskanal 6 mit Prozessabgas der Abstehwanne 4 beaufschlagt wird. Die Betriebssicherheit des Abgasreinigungssystems wächst, da die Betriebstemperatur im Abgaskanal im Mittel deutlich wächst. Die für die Entstickung notwendige Mindesttemperatur von ca. 330 Grad Celsius wird überschritten.

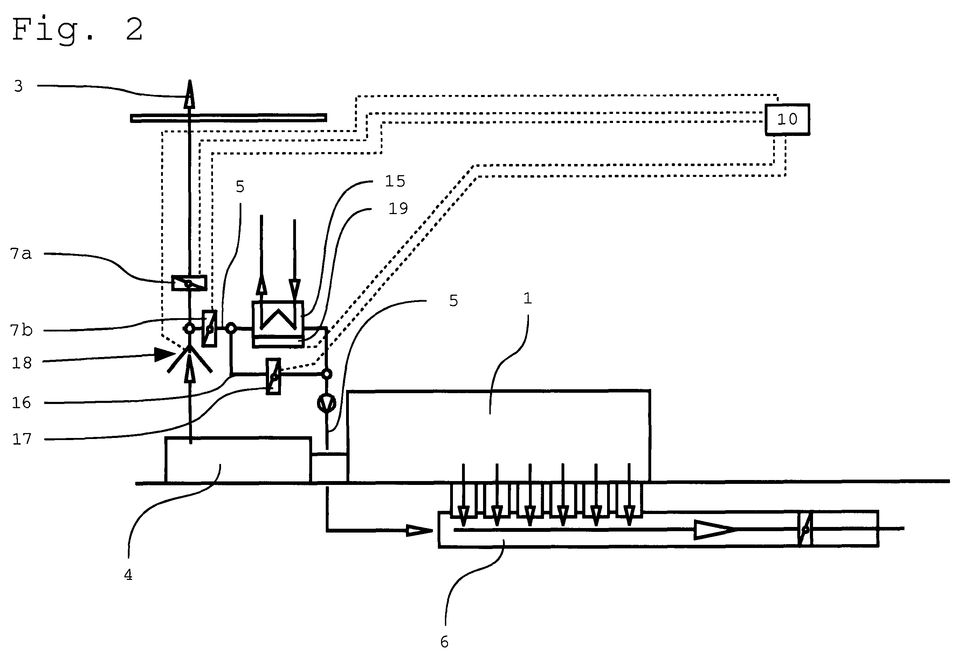

Darüber hinaus ist es, wie in Figur 2 dargestellt, vorgesehen, dass im Bypass 5 ein an sich bekannter Überhitzer 15 einer Dampfkraftmaschine angeordnet ist. Der Überhitzer 15 besitzt einen Überhitzerbypass 16 mit einer im Überhitzerbypass 16 angeordneten Überhitzerbypassregelklappe 17. Die bei geöffneter Regelklappe 7b in den Bypass 5 geleiteten Abgase der Abstehwanne durchströmen bei geschlossener Überhitzerbypassregelklappe 17 den Überhitzer 15. Der in der Dampfkraftmaschine erzeugte Sattdampf wird im Überhitzer 15 weiter erhitzt. Hierdurch ist es möglich, die Turbine der Dampfkraftmaschine effizienter anzutreiben. Der überhitzte Dampf ermöglicht den Einsatz einer zweistufigen Turbine. Die elektrische Leistung am Generator kann damit fast verdoppelt werden.

Neben der Überhitzung von Sattdampf ist eine Überhitzung von Fluiden möglich. Als Beispiel sei Öl genannt. Derartige Überhitzer 15 sind ebenfalls einsetzbar.

Bei wechselnden Produktionsmengen ist mit ebenfalls wechselnden Abgastemperaturen der Abstehwanne zu rechnen. Somit ist der in den Bypass 5 geleitete Abgasstrom von unterschiedlicher Temperatur. Die Temperatur kann hierbei den Grenzwert für einen effektiven Betrieb des Überhitzers 15 unterschreiten. Um den Betrieb des Überhitzers 15 sicherzustellen, ist am Überhitzer 15 eine zusätzliche Wärmequelle 19 vorgesehen. Die als Erdgasbrenner ausgeführte Wärmequelle 19 erhitzt die Abgase mit einer gegebenenfalls zu niedrigen Temperatur auf die für die Überhitzung notwendige Temperatur. Die den Überhitzer 15 durchströmten Abgase werden in den Hauptabgaskanal 6 der Schmelzwanne 1 und weiter in die Reinigungssysteme 12, die Entgiftungssysteme 12 und weitere Wärmetauschersysteme 12 geleitet.

Zur effizienten Nutzung der Abwärme aus den Abgasen der Abstehwanne 4 werden die Abgase in einer im Kamin 3 befindlichen Mischstelle 18 mit Umgebungsluft der Anlagenhalle gemischt. Hierdurch lassen sich großen Mengen an ausreichend temperiertem Abgas der Abstehwanne 4 in den Bypass 5 und Überhitzer 15 leiten, so dass die Funktion des Überhitzers gewährleistet ist und die Abgastemperatur für die nachgelagerten Reinigungssysteme 12 und die Entgiftungssysteme 12 nicht unter die notwenigen Grenzwerte sinkt. Die Mischstelle 18 ist im Kamin 3 nach der Abstehwanne 4 und vor den Regelklappen 7a und 7b angeordnet.

### Zusammenstellung der Bezugszeichen

- 1: - Querflammenwanne, Schmelzwanne
- 2: - Regenerativheizungen
- 3: - Kamin
- 4: - Abstehwanne
- 5: - Bypass
- 6: - Hauptabgaskanal
- 7a, 7b: - Regelklappe
- 8: - Ofendrucksensors
- 9: - Abgasvolumensensors
- 10: - Steuerung
- 11: - Befeuerungssteuerung
- 12: - Reinigungssystem, Entgiftungssystem, Wärmetauschersystem
- 13: - Saugzugbypass
- 14: - Saugzug
- 15: - Überhitzer
- 16: - Überhitzerbypass
- 17: - Überhitzerbypassregeklappe
- 18: - Mischstelle
- 19: - Wärmequelle
- 20: - Ofendruckregelklappe
- 21: - Saugzugbypassregelklappe

## Patentansprüche

1. Verfahren zur Einspeisung von Prozessabgasen und zur Regelung des Abgasvolumens zur Verbesserung der Ofendruckstabilisierung bei Glasschmelz- und Läuterprozessen in Querflammenwannen (1) bzw. Schmelzwannen (1) mit Regenerativheizungen (2), wobei bei einem Befeuerungswechsel zwischen zwei Regenerativheizungen (2) sowie bei auftretenden Druckschwankungen durch im Abgasstrom enthaltenen Reinigungssystemen (12), Entgiftungssystemen (12) und Wärmetauschersystemen (12) ein Saugzugbypass (13) in einem Saugzug (14) geöffnet und geschlossen wird,
**dadurch gekennzeichnet,**
**dass** die Abgase aus einem Kamin (3) einer Abstehwanne (4) über einen Bypass (5) in einen Hauptabgaskanal (6) der Querflammenwanne (1) geleitet werden, wobei in dem Kamin (3) mindestens eine Regelklappe (7a) und/oder im Bypass (5) mindestens eine Regelklappe (7b) geöffnet und geschlossen werden, wobei das Öffnen und Schließen der Regelklappen (7a, 7b) durch die prozessbestimmenden Größen des Ofendrucks und des Abgasvolumenstroms beeinflusst wird und diese prozessbestimmenden Größen durch mindestens einen Ofendrucksensor (8) und mindestens einen Abgasvolumensensor (9) erfasst und diese Messgrößen in regelmäßigen Abständen an eine Steuerung (10) für die Regelklappen (7a, 7b) übermittelt werden.

2. Verfahren nach Anspruch 1, **dadurch gekennzeichnet, dass** die Öffnung der Regelklappen (7a , 7b) in Abhängigkeit der Befeuerung und/oder der Befeuerungswechselintervalle einstellbar ist, wobei die Steuerung (10) mit der Befeuerungssteuerung (11) verbunden ist.

3. Verfahren nach einem der vorhergehenden Ansprüche,
**dadurch gekennzeichnet,**
**dass** die in den Bypass (5) geleiteten Abgase durch einen an sich bekannten Überhitzer (15) vorzugsweise von Dampfkraftmaschinen geleitet werden, wobei der Öffnungsgrad einer in einem Überhitzerbypass (16) angeordneten Überhitzerbypassregelklappe (17) durch die Steuerung (10) angepasst wird.

4. Verfahren nach Anspruch 3,
**dadurch gekennzeichnet,**
**dass** im Überhitzer (15) eine Wärmequelle (19) vorzugsweise in Form eines Gasbrenners bedarfsweise zugeschaltet wird, wobei die Wärmequelle (19) mit der Steuerung (10) verbunden ist.

5. Verfahren nach einem der vorhergehenden Ansprüche,
**dadurch gekennzeichnet,**
**dass** die aus der Abstehwanne in den Kamin (3) abgeleiteten Abgase eine Mischstelle (18) durchlaufen, wobei den Abgasen Umgebungsluft beigemischt wird und die Mischstelle (18) vor den Regelklappen (7a und 7b) angeordnet ist und das Mischungsverhältnis durch die Steuerung (10) angepasst wird.

6. Einrichtung zur Einspeisung von Prozessabgasen und zur Regelung der Abgasvolumenmenge zur Verbesserung der Ofendruckstabilisierung bei Glasschmelz- und Läuterprozessen in Querflammenwannen (1) bzw. Schmelzwannen (1) mit Regenerativheizungen (2), wobei bei einem Befeuerungswechsel zwischen zwei Regenerativheizungen (2) sowie bei auftretenden Druckschwankungen durch im Abgasstrom enthaltenen Reinigungssystemen (12), Entgiftungssystemen (12) und Wärmetauschersystemen (12) ein Saugzugbypass (13) in einem Saugzug (14) geöffnet und geschlossen wird,
**dadurch gekennzeichnet,**
**dass** am Kamin (3) einer Abstehwanne (4) ein Bypass (5) angeordnet ist, wobei der Bypass (5) in einen Hauptabgaskanal (6) der Querflammenwanne (1) geführt ist und in dem Kamin (3) mindestens eine Regelklappe (7a) und/oder im Bypass (5) mindestens eine Regelklappe (7b) vorhanden ist und die Regelklappen (7a, 7b) mit einer Steuerung (10) verbunden sind, wobei die Steuerung (10) der Regelklappen (7a, 7b) mit mindestens einem Ofendrucksensor (8)
und mit mindestens einem Abgasvolumenmengensensor (9) verbunden ist.

7. Einrichtung nach Anspruch 6,
**dadurch gekennzeichnet,**
**dass** die Steuerung (10) der Regelklappen (7a, 7b) mit einer Befeuerungssteuerung (11) verbunden ist.

8. Einrichtung nach den Ansprüchen 6 und 7,
**dadurch gekennzeichnet,**
**dass** im Bypass (5) ein an sich bekannten Überhitzer (15) vorzugsweise von Dampfkraftmaschinen angeordnet ist, wobei der Überhitzer (15) nach der Regelklappe (7b) angeordnet ist und der Überhitzer (15) einen Überhitzerbypass (16) mit einer Überhitzerbypassregeklappe (17) besitzt und die Überhitzerbypassregeklappe (17) mit der Steuerung (10) verbunden ist.

9. Einrichtung nach Anspruch 8,
**dadurch gekennzeichnet,**
**dass** am Überhitzer (15) eine zusätzliche Wärmequelle (19) vorzugsweise in Form eines Gasbrenners angeordnet ist, wobei die Wärmequelle (19) mit der Steuerung (10) verbunden ist.

10. Einrichtung nach den Ansprüchen 6 bis 9,
**dadurch gekennzeichnet,**
**dass** in dem Kamin (3) eine Mischstelle (18) vorhanden ist, wobei die Mischstelle (18) vor den Regelklappen 7a, 7b angeordnet ist.

## Claims

1. Method for feeding process gases and regulating the waste gas volume to improve oven pressure stabilisation with glass melting and purifying processes in cross-firing ends (1) or melting ends with regenerative heaters (2), where with a firing change between two regenerative heaters (2) as well as pressure fluctuations occurring through cleaning systems (12), detoxification systems (12) and heat exchanger systems (12) contained in the waste gas flow a suction draught bypass (13) is opened and closed in a suction draught (14),
**characterised in that,**
the waste gases are directed from a chimney (3) of a conditioner (4) via a bypass (5) into a main waste gas channel (6) of the cross-firing end (1) where in the chimney (3) at least one regulating flap (7a) and/or in the bypass (5) at least one regulating flap (7b) are opened and closed where opening and closing the regulating flaps (7a, 7b) is affected by the process-determining variables of the oven pressure and the waste gas volume flow and these process-determining variables are recorded by at least one oven pressure sensor (8) and at least one waste gas volume sensor (9) and these measurands are transmitted at regular intervals to a control unit (10) for the regulating flaps (7a, 7b).

2. Method according to claim 1, **characterised in that** the opening of the regulating flaps (7a, 7b) can be adjusted according to firing and/or the firing alternating intervals whereby the control unit (10) is connected with the firing control (11).

3. Method according to one of the above claims, **characterised in that** the waste gases directed into the bypass (5) are directed to an otherwise known superheater (15) preferably from steam power engines, whereby the degree of opening is adjusted by the control unit (10) through a superheater bypass regulator flap (17) located in a superheater bypass (16).

4. Method according to claim 3,
**characterised in that**
a heat source (19), preferably in the form of a gas burner, is activated as needed in the superheater (15) whereby the heat source (19) is connected to the control unit (10).

5. Method according to one of the above claims,
**characterised in that,**
the waste gases directed from the conditioner into the chimney (3) pass through a mixing point (18) where ambient air is mixed with the waste gases and the mixing point (18) is arranged upstream of the regulating flaps (7a and 7b) and the mixing ratio is adjusted by the control unit (10).

6. Device for feeding process gases and regulating the waste gas volume to improve oven pressure stabilisation with glass melting and purifying processes in cross-firing ends (1) or melting ends with regenerative heaters (2), where with a firing change between two regenerative heaters (2) as well as pressure fluctuations occurring through cleaning systems (12), detoxification systems (12) and heat exchanger systems (12) contained in the waste gas flow a suction draught bypass (13) is opened and closed in a suction draught (14),
**characterised in that,**
on the chimney (3) of a conditioner (4) a bypass (5) is arranged whereby the bypass (5) is directed into a main waste channel (6) of the cross-firing end (1) and the chimney (3) contains at least one regulating flap (7a) and/or the bypass (5) contains at least one regulating flap (7b) and the regulating flaps (7a, 7b) are connected with a control unit (10) whereby the control unit (10) of the regulating flaps (7a, 7b) is connected at least with one over pressure sensor (8) and with a least one waste gas volume sensor (9).

7. Device according to claim 6,
**characterised in that,**
the control unit (10) of the regulating flaps (7a, 7b) is connected with a firing control (11).

8. Device according to claims 6 and 7,
**characterised in that,**
in the bypass (5) an otherwise known superheater (15), preferably from steam power engines, is arranged whereby the superheater (15) is arranged after the regulating flap (7b) and the superheater (15) features a superheater bypass (16) with a superheater bypass regulating flap (17) and the superheater bypass regulating flap (17) is connected with the control unit (10).

9. Device according to claim 8,
**characterised in that,**
an additional heat source (19), preferably in the form of a gas burner, is arranged whereby the heat source (19) is connected to the control unit (10).

10. Device according to claims 6 to 9,
**characterised in that,**
in the chimney (3) a mixing point (18) exists whereby the mixing point (18) is arranged upstream of the regulating flaps 7a, 7b.

## Revendications

1. Procédé pour l'alimentation de gaz d'échappement de processus et pour le réglage du volume de gaz d'échappement pour l'amélioration de la stabilisation de la pression du four lors de processus de fusion de verre et d'affinage dans des bassins à brûleurs transversaux (1) ou des bassins de fusion (1) avec des chauffages régénératifs (2), sachant qu'en cas d'alternance du système de chauffage entre deux chauffages régénératifs (2) ainsi qu'en cas d'apparition de variations de pression dues aux systèmes de nettoyage (12), aux systèmes de décontamination (12) et aux systèmes d'échangeurs de chaleur (12) présents dans le flux de gaz d'échappement, une dérivation de tirage par aspiration (13) s'ouvre et se ferme par un tirage par aspiration (14),
**caractérisé en ce que**
les gaz d'échappement sortants d'une cheminée (3) d'une zone de braise(4) sont dirigés via une dérivation (5) dans un conduit d'échappement principal (6) du bassin à brûleurs transversaux (1), sachant que s'ouvrent et se ferment au moins une valve de réglage (7a) dans la cheminée (3) et/ou au moins une valve de réglage (7b) dans la dérivation (5), sachant que l'ouverture et la fermeture des valves de réglage (7a, 7b) est influencée par les grandeurs - déterminant le processus - de la pression du four et du débit volumétrique des gaz d'échappement et que ces grandeurs déterminant le processus sont enregistrées par au moins un capteur de pression du four (8) et au moins un capteur de volume des gaz d'échappement (9) et que ces grandeurs mesurées sont transmises à intervalles réguliers à une commande (10) pour les valves de réglage (7a, 7b).

2. Procédé selon la revendication 1, **caractérisé en ce que** l'ouverture des valves de réglage (7a , 7b) est réglable en fonction du système de chauffage et/ou des intervalles d'alternance du système de chauffage, sachant que la commande (10) est raccordée à la commande du système de chauffage (11).

3. Procédé selon l'une des revendications précédentes,
**caractérisé en ce que** les gaz d'échappement conduits vers la dérivation (5) soient conduits par un surchauffeur (15) de préférence typique des machines motrices à vapeur, sachant que le degré d'ouverture d'une valve de réglage de dérivation du surchauffeur placée dans une dérivation du surchauffeur (16) (17) est adapté par la commande (10).

4. Procédé selon la revendication 3,
**caractérisé en ce que**
dans le surchauffeur (15), une source de chaleur (19), de préférence sous la forme d'un bec à gaz, est activée si nécessaire, sachant que la source de chaleur (19) est raccordée à la commande (10).

5. Procédé selon l'une des revendications précédentes,
**caractérisé en ce que**
les gaz d'échappement de la zone de braise évacués dans la cheminée (3) traversent une zone de mélange (18), sachant que de l'air ambiant est ajouté aux gaz d'échappement et que la zone de mélange (18) est placée avant les valves de réglage (7a et 7b) et que le rapport de mélange est adapté par la commande (10).

6. Dispositif pour l'alimentation de gaz d'échappement de processus et pour le réglage du volume de gaz d'échappement pour l'amélioration de la stabilisation de la pression du four lors de processus de fusion de verre et d'affinage dans des bassins à brûleurs transversaux (1) ou des bassins de fusion (1) avec des chauffages régénératifs (2), sachant qu'en cas d'alternance du système de chauffage entre deux chauffages régénératifs (2) ainsi qu'en cas d'apparition de variations de pression dues aux systèmes de décontamination (12) et aux systèmes d'échangeurs de chaleur (12) présents dans le flux de gaz d'échappement, une dérivation de tirage par aspiration (13) s'ouvre et se ferme par un tirage par aspiration (14),
**caractérisé en ce que**
une dérivation (5) est placée sur la cheminée (3) d'une zone de braise (4), sachant que la dérivation (5) est conduite dans un conduit d'échappement principal (6) du bassin à brûleurs transversaux (1) et qu'au moins une valve de réglage (7a) se trouve dans la cheminée (3) et/ou au moins une valve de réglage (7b) se trouve dans la dérivation et que les valves de réglage (7a, 7b) sont raccordées à une commande (10), sachant que la commande (10) des valves de réglage (7a, 7b) est raccordée au moins à un capteur de pression du four (8) et au moins à un capteur de volume des gaz d'échappement (9).

7. Dispositif selon la revendication 6,
**caractérisé en ce que**
la commande (10) des valves de réglage (7a, 7b) est raccordée à une commande du système de chauffage (11).

8. Dispositif selon les revendications 6 et 7,
**caractérisé en ce que**
un surchauffeur (15), de préférence typique des machines motrices à vapeur, est placé dans la dérivation (5), sachant que le surchauffeur (15) est placé après la valve de réglage (7b) et que le surchauffeur (15) possède une dérivation de surchauffeur (16) avec une valve de réglage pour la dérivation du surchauffeur (17) et que la valve de réglage pour la dérivation du surchauffeur (17) est raccordée à la commande (10).

9. Dispositif selon la revendication 8,
**caractérisé en ce que**
une source de chaleur (19), de préférence sous la forme d'un bec à gaz, est placée sur le surchauffeur (15), sachant que la source de chaleur (19) est raccordée à la commande (10).

10. Dispositif selon les revendications 6 à 9,
**caractérisé en ce que**
une zone de mélange (18) est présente dans la cheminée (3), sachant que la zone de mélange (18) est placée avant les valves de réglage 7a, 7b.
